# EUROPEAN PATENT APPLICATION

(11) **EP 4 679 216 A1**
(43) Date of publication of application: **14.01.2026**
(21) Application number: 24216993.6
(22) Date of filing: 03.12.2024
(51) Int. Cl.: G05D 1/226, B65G 1/04, G05D 1/698, G05D 105/28, G05D 107/70, G05D 109/10, G05D 105/40

(54) **ROBOTIC CONTAINER-HANDLING VEHICLE, AUTOMATED STORAGE SYSTEM, METHOD AND COMPUTER-READABLE MEDIUM**

(30) Priority: 10.07.2024 US 202463704183 P
(71) Applicant: AutoStore Technology AS, 5578 Nedre Vats (NO)
(72) Inventor: JOSHI, Parth, 5578 Nedre Vats (NO); Fjeldheim, Ivar, 5578 Nedre Vats (NO)
(74) Representative: Kilburn & Strode LLP

(57) **Abstract**

The disclosure relates to a robotic container-handling vehicle configured to move about a grid of rails of an automated storage system and act as a mesh node for communicating with other such vehicles.

## Description

### TECHNICAL FIELD

The disclosure relates to a robot. More particularly, it relates to robotic container-handling vehicle and a method of communicating between such vehicles.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles are capable of travelling at high speeds in X- and Y-directions along the rails, and a control system is provided to optimise route planning and wirelessly provide routing information for routing each container handling vehicle about the grid. For larger grids, and to ensure coverage of the entire grid, the control system may use multiple access points to provide the routing information.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a processing system suitable for carrying out the methods described herein at a robot;
Fig. 6A shows a mesh network in a first topological configuration;
Fig. 6B shows the mesh network of Fig. 6A in a second topological configuration;
Fig. 7 shows another mesh network;
Fig. 8 is a flowchart of a method according to this disclosure; and
Fig. 9 is a flowchart of a further method according to this disclosure.

### DETAILED DESCRIPTION

In overview, the disclosure relates to a robotic container-handling vehicle configured to move about a grid of rails of an automated storage system whilst acting as a mesh network node and communicating with other such vehicles. By using the vehicles to relay information between themselves, full coverage of the grid by fixed access points may not be needed and so the number of fixed access points may be reduced. As one possibility, full coverage of the grid by fixed access points is retained and the mesh network may be used as a secondary network that can be used differently to the network of fixed access points communicating directly with the vehicles. For example, the network of fixed access points may be used to provide the vehicles with routing information for routing movement of the vehicles across the grid whereas the mesh network may be used for provide service/sensor/maintenance information from the vehicles to a control system. Such an approach can ensure that routing of the vehicles is not deleteriously affected by service/sensor/maintenance data traffic.

As mesh networks tend to be directed to low power consumption and low overheads, they are well suited to networks of objects that do not move often - such as domestic IoT (Internet of Things) devices like household appliances: washing machines, refrigerators, heaters and air conditioners. The use of a mesh network for vehicles that are constantly and rapidly moving relative to one another rather goes against the grain as the overheads associated with each node configuring itself relative to nearby other nodes may be very high/prohibitive. In other words, the mesh nodes may spend all or nearly all of their processing time reconfiguring themselves in relation to other (constantly moving) nodes - thereby increasing power consumption and reducing bandwidth.

By transforming robots into mobile mesh network nodes, the system enhances connectivity, reduces infrastructure costs, and improves overall operational efficiency and cost efficiency (by reducing the need for numerous access points/lowering infrastructure costs). Moreover, the approach can lead to: improved real-time tracking and monitoring of inventory and robot positions, enhanced data collection and analytics through continuous and reliable data transmission, and seamless integration with other IoT, Internet of Things, devices and systems within the warehouse ecosystem. The approach is also easily scalable as new robots can be automatically added to the system and the amount of infrastructure required when a storage system is expanded can be lower.

### Automated storage and retrieval system overview

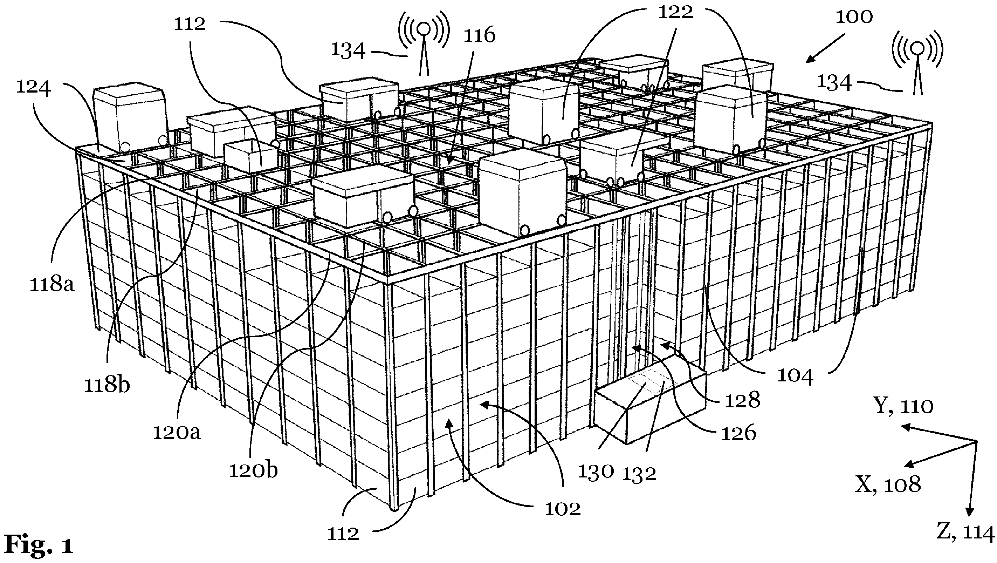

Referring to the embodiment shown in Fig. 1, an automated storage system has a grid 100 which comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110 (a grid of rails). Robotic container-handling vehicles, or robots, 122, which can be of a range of size, shape and function, are provided and configured to run on the rails 118, 120 and to transport bins 112 in both the X and Y directions 108, 110 so as to move about the grid of rails of the automated storage system. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

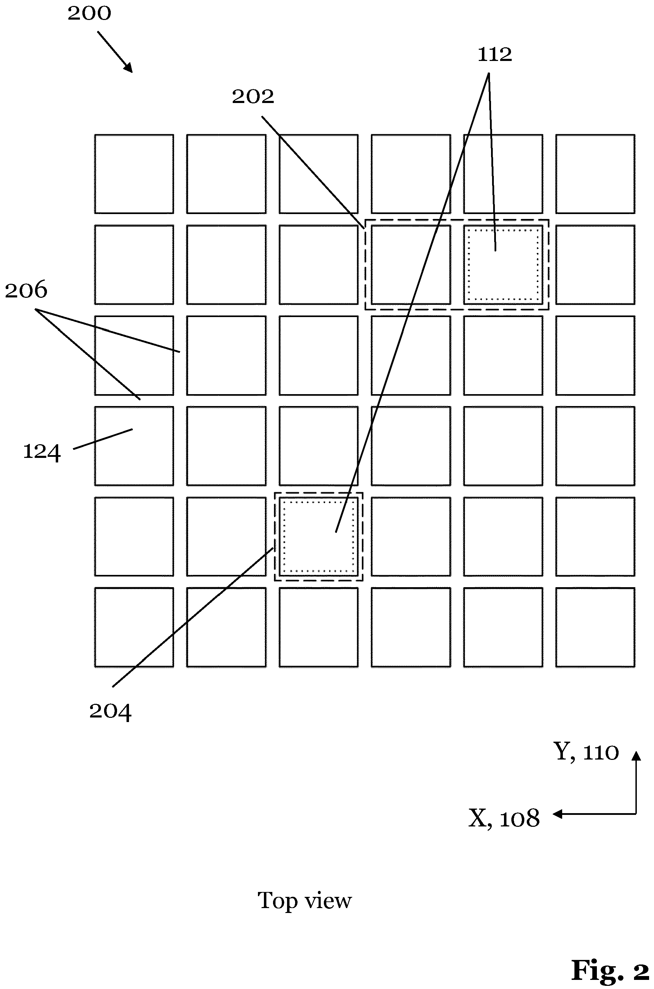

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

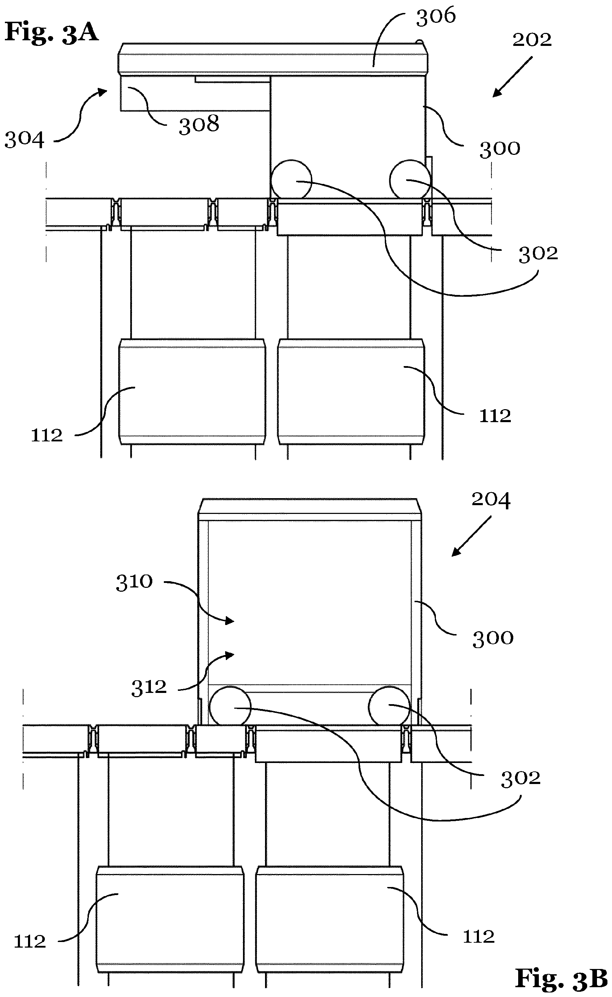

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

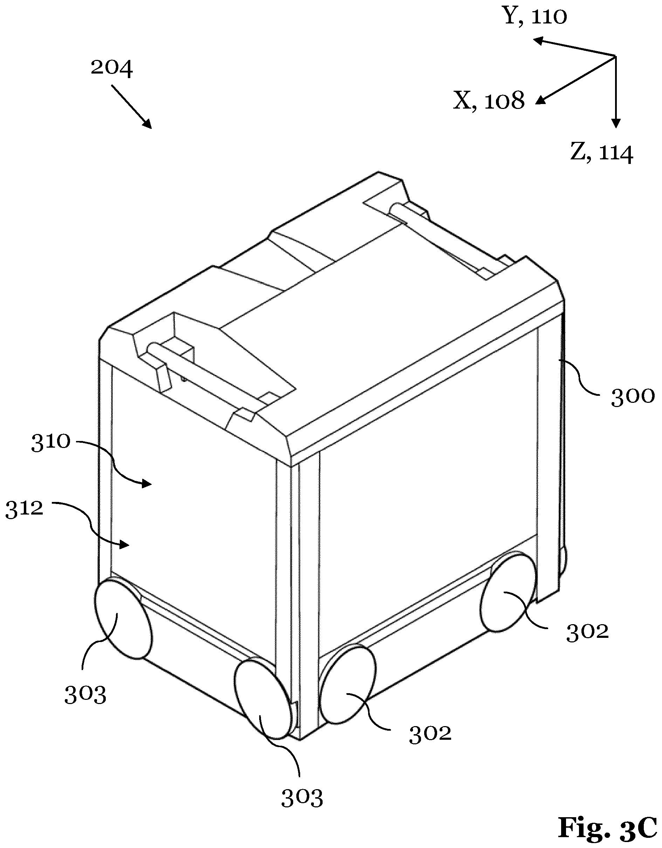

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

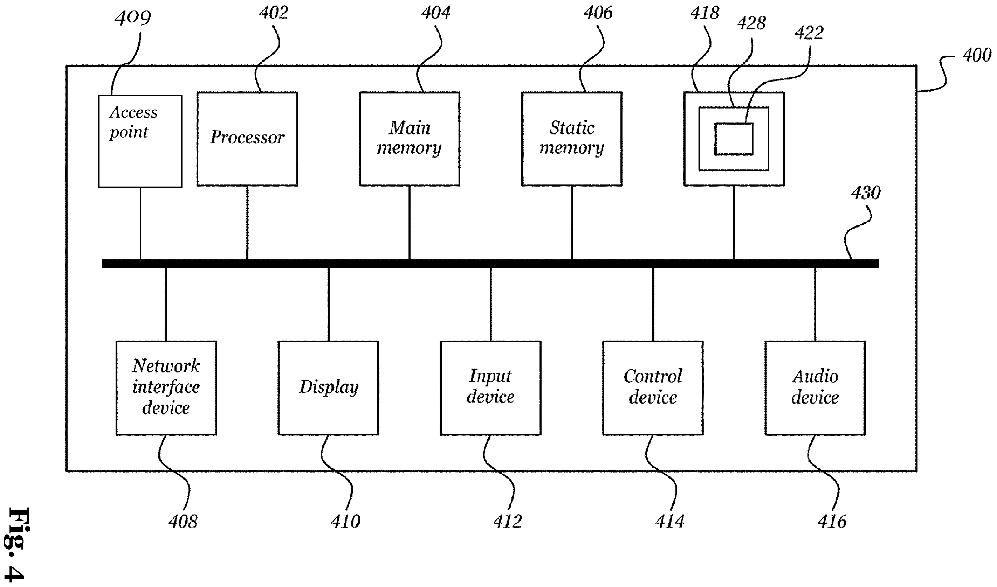

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a control processing system 400 suitable for carrying out the methods described herein either in part or fully will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The control processing system 400 may further include a network interface device 408 for interfacing to network the system 400 to other machines in a Local Area Network (LAN), an intranet, an extranet, or the Internet. As one possibility, the network interface device may connect to one or more access points 134 for wirelessly communicating with the robots 122 and which may be ceiling mounted. Additionally or alternatively, the control processing system 400 may itself include an access point 409 for wirelessly communicating with the robots 122. Information conveyed to the robots 122 via the access point(s) 134, 409 may include routing information for routing movement of one or more robots across the grid. Coverage of the grid by the access point(s) 134, 409 may not be complete in which case relaying of information by the robots 122 acting as mesh nodes is relied upon in order to cover grid locations not covered by the access point(s) 134, 409.

Routing information for routing movement of one or more robots across the grid may be broadcast from one or more access points 134, 409 to all robots 122 or may be unicast to a specific robot or multicast to a subset of the robots. The routing information sent in a given message may be respective routing information for each of the robots or for a subset or just one of the robots. The routing information for a given robot enables that robot to determine how to move about the grid. The routing information may be relative - for example advance three cells in the x-direction then two cells in the y-direction before advancing a further seven cells in the x-direction; or it may be absolute - for example, advance to cell 45,23 without passing via (or within a range of 3 cells of) cell 31, 23. The routing information may contain a temporal aspect - for example: advance three cells in the x-direction then wait for a certain time period before advancing two cells in the y-direction. The combined set of routing information for all robots enables the set of robots to each move between respective current and target locations on the grid without colliding. The routing information may contain position information about one or more robots so that the combined set of routing information for all robots enables determination of the location of all of the robots at any point in time covered by the routing instructions. The routing information may identify each robot using a device ID, such as a MAC, Media Access Control Address or an IP, Internet Protocol, address; such inclusion may facilitate mesh node configuration by providing the robots with device IDs for other robots and thereby avoiding the need for robots to run node discovery processes.

The control processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the control processing system 400 shown in Fig. 4 may be absent. For example, the control processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, control processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the control processing system 400, the main memory 404 and the processor 402 also constituting computer-readable storage media 428.

### Processing system at the robot

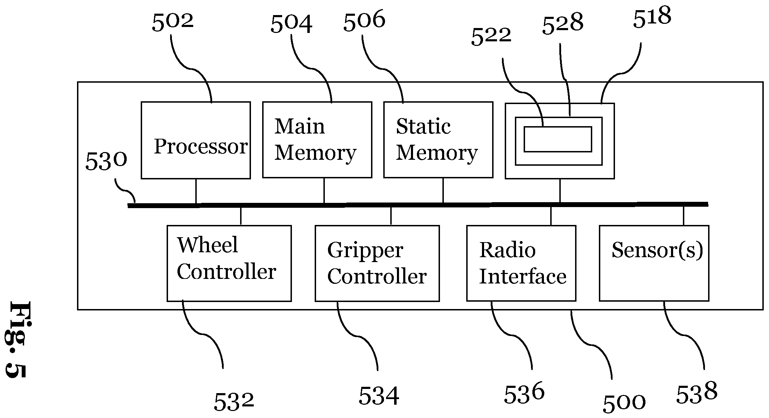

With reference to Fig. 5, a robot processing system 500 suitable for carrying out the methods described herein at the robot 122, 202, 204 will now be described. Fig. 5 shows a block diagram of one implementation of a robot processing system 500 of the robot 202, 204 in the form of a computing device at the robot 122, 204, 205 within which a set of instructions for causing the computing device to perform any one or more of the methods described herein may be executed.

The example robot processing system 500 includes a processor 502, a main memory 504 (e.g., read-only memory (ROM), flash memory, dynamic random-access memory (DRAM) such as synchronous DRAM (SDRAM) or Rambus DRAM (RDRAM), etc.), a static memory 506 (e.g., flash memory, static random-access memory (SRAM), etc.), and a secondary memory (e.g., a data storage device 518), which communicate with each other via a bus 530.

Processor 502 represents one or more general-purpose processors such as a microprocessor, central processing unit, or the like. More particularly, the processor 502 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 502 may also be one or more special-purpose processors such as an application specific integrated circuit (ASIC), a field programmable gate array (FPGA), a digital signal processor (DSP), network processor, or the like. Processor 502 is configured to execute the processing logic (instructions 522) for performing the operations and steps described herein.

The data storage device 518 may include one or more machine-readable storage media (or more specifically one or more non-transitory computer-readable storage media) 528 on which is stored one or more sets of instructions 522 embodying any one or more of the methods or functions described herein. The instructions 522 may also reside, completely or at least partially, within the main memory 504 and/or within the processor 502 during execution thereof by the robot processing system 500, the main memory 504 and the processor 502 also constituting computer-readable storage media 528.

The robot processing system 500 further includes a wheel controller 532 for controlling movement of the wheels 302 - for example so as to relatively raise or lower one or both sets of wheels 302 and actuate movement of the wheels so as to enable the robot 122 to move in the X- and Y- directions and to stop.

The robot processing system 500 further includes a gripper controller 534 for controlling operation of the lifting device 304 and the gripping device 308 in order to allow the vehicle to pick up, let go of, raise and lower containers. As one possibility, the functionality of both the wheel controller 532 and the gripper controller 534 may be combined in a single controller.

The robot processing system 500 further includes a radio interface 536. The radio interface 536 enables wireless communication between the robotic container handling vehicle 122, 202, 204 and one or more other robotic container handling vehicles 122, 202, 204 so that those robotic container-handling vehicles are nodes in a mesh network. For at least some of the robots 122, 202, 204, the radio interface 536 further enables wireless communication between the robotic container handling vehicle 122, 202, 204 and the control processing system 400 via the one or more access points 134, 409. Examples of radio technologies/protocols that the radio interface 536 may use include: IEEE 802.11s, Zigbee, Z-Wave, Bluetooth Low-Energy (BLE), WiFi Direct, 6LoWPAN, IEEE 802.11 IEEE 802.15, IEEE 802.16, Bluetooth, and 3Gpp Technologies. The radio interface 536 may use a first radio protocol for communicating with one or more other robotic container handling vehicle and a second, different, radio protocol for communicating with the control processing system 400. As another possibility, the radio interface 536 may use same protocol for communicating with the control processing system 400, but use different resources within that protocol for communicating respectively with the control processing system 400 and other robotic container handling vehicles. Examples of such different radio resources may include: different channels, different frequencies, and different timeslots.

The robot processing system 500 further includes one or more sensors 538. One or more of the sensors 538 may be capable of sensing operating conditions of the robot 122, 292, 204 - such as whether or not a pair of wheels is lowered/the extent of lowering, the position of the gripping device 308, the strain caused by a load carried by the robot, the speed of the robot over the grid, the speed/position of one or more motors, whether the robot is tilted, etc. Additionally or alternatively, one or more of the sensors 538 may be capable of measuring environmental conditions such as temperature or humidity. Additionally or alternatively, one or more of the sensors 538 may be capable of interacting with portions of the grid in order to determine/sense the position of the robot on the grid.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. Routing of the robot 202 is performed by the processing system 400 providing the robot 122 with routing information from which the robot 202 can determine how to move about grid 100 from its current location to a target location. The routing information may be provided by the processing system 400 via one or more wireless access points 134 and/or via an access point 409 of the processing system itself. Upon reaching the target location, the robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Mesh topology

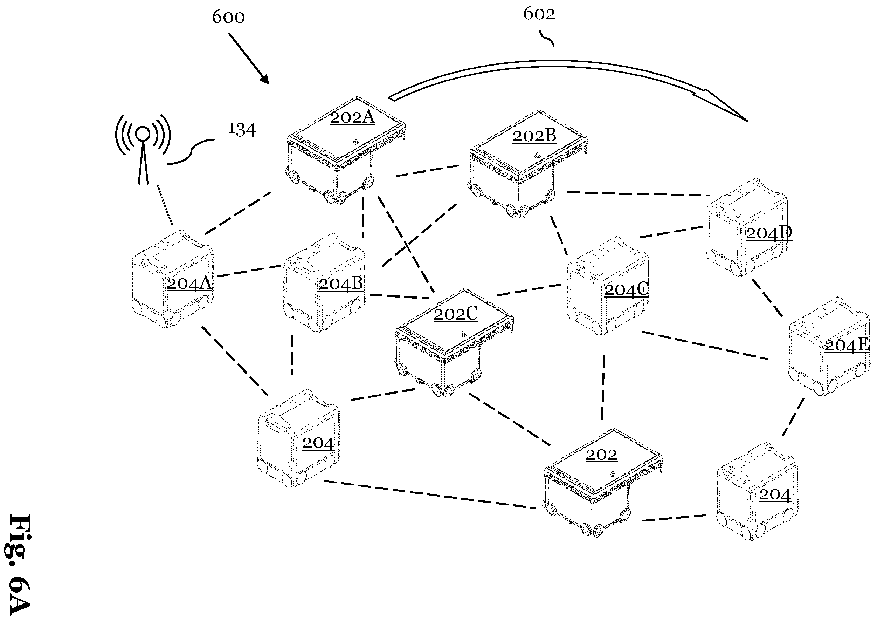

Fig. 6A shows a mesh network 600 in a first topological configuration in which a plurality of robotic container-handling vehicles 202, 204 are shown spaced about a grid of rails (not shown). The dashed lines indicate the wireless (mesh) connections between the respective robotic container-handling vehicles 202, 204 and a dotted line shows a radio connection between one of the robotic container-handling vehicles (in this case vehicle 204A) and an access point 134 (although access point 409 could additionally/alternatively be used). In the configuration of Fig. 6A, the control processing system 400 communicates via the access point 134 with the mesh network 600 in order to convey routing information to the nodes (robotic container handling vehicles 202, 204) of the mesh network via a primary contact node - in this case robotic container handling vehicle 204A. The primary contact node need not remain container handling vehicle 204A and may instead change to another vehicle as the container handling vehicles move about the grid - for example the primary contact node may be assigned by the control processing system 400 based on the control processing system's knowledge of which of the robotic container handling vehicles 202, 204 will be best suited (for example by being nearest to access point 134) for acting as a primary contact node at a given point in time. Although only a single primary contact node has been described in relation to Fig. 6A, there may be a plurality of such nodes, with each access point 134, 409 in contact with one or more of the nodes of the mesh network 600.

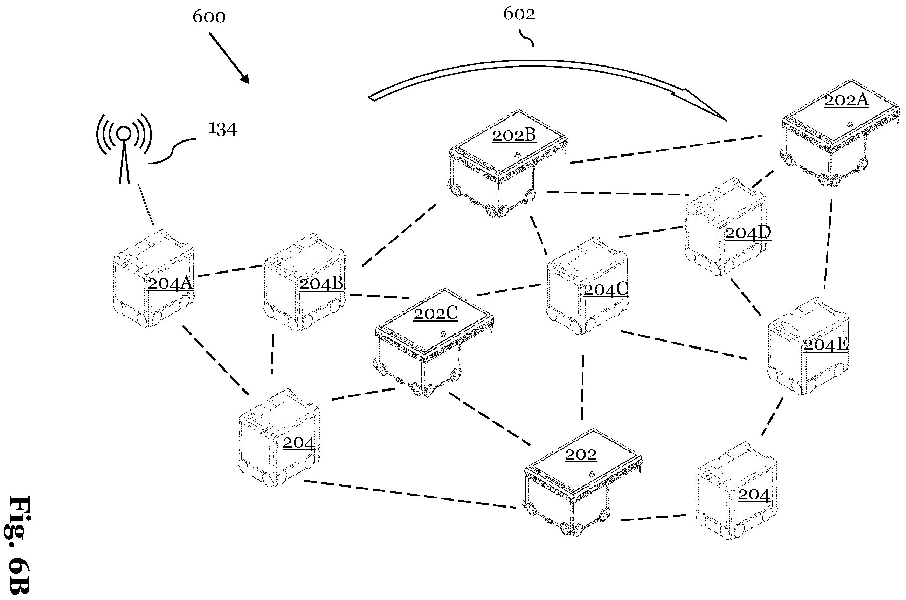

Fig. 6B shows the mesh network 600 of Fig. 6A in a second topological configuration in which robotic container-handling vehicle 202A has moved in a direction indicated by arrow 602 to a new location and now acts as a mesh node communicating with different mesh nodes than it did in the topology of Fig. 6A. In particular, whereas in Fig. 6A, robotic container-handling vehicle 202A acted as a mesh node communicating with nodes at robotic container-handling vehicles 204A, 204B, 202C and 202B, in Fig.6B robotic container-handling vehicle 202A is configured to act as a mesh node communicating with nodes at robotic container-handling vehicles 202B, 204D and 204E.

By virtue of the mesh network 600 of Fig.s 6A and 6B, the need for complete coverage of the grid by the access point(s) 134, 409 is removed as, provided that a single access point is in communication with the mesh network, then information can be introduced to the mesh network 600 via that access point and they relayed on to a destination node via the mesh network.

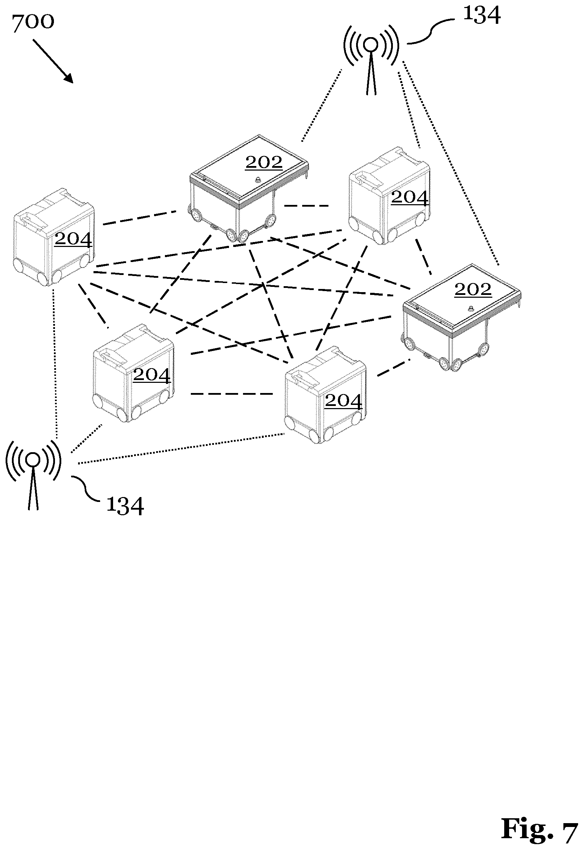

Fig. 7 shows an alternative mesh network 700 in which every robotic container-handling vehicle 202, 204 of the mesh network 700 is in communication with at least one of the access points 134, 409. In one example of the operation of mesh network 700, the robotic container-handling vehicle 202, 204 may be configured stop moving/disable its movement about the grid in the event that it does not receive an expected signal directly from an access point 134, 409. This is a safety measure which can avoid crashes in error situations such as when the control processing system 400 is unable to provide routing information to the robotic container-handling vehicle 202, 204. If the robotic container-handling vehicles 202, 204 were to continue moving during such an error situation, the situation would be made much worse if robots also started to crash into one another. Nevertheless, it maybe beneficial in such situations to be able to communicate information even when movement of the robotic container-handling vehicle about the grid is disabled. For example, if the control processing system 400 has stopped sending routing information via the access point 134 consequent to a fire alarm having been triggered, then temperature sensor data from the robots 122, 202, 204 may facilitate localisation of the fire. Accordingly, as one possibility status information about at least one of the robotic container-handling vehicles is communicated via the mesh nodes back to the control processing system 400. The status information may comprises one or more of sensor information, diagnostic information, service information, and maintenance information about at least one of the robotic container-handling vehicles.

Even in situations where the control processing system 400 has not stopped sending routing information, it may be beneficial to use a (dedicated) protocol/radio resource for communication of time- and safety-critical routing information to the robots 122, 202, 204 (including optionally via the access points) whilst using another protocol/radio resource for communication of less critical data such as the above-described status information.

Additionally and optionally, Fig 7 shows the situation wherein each node of the mesh network 700 is configured for mesh communication with all of the other nodes of the mesh network 700. For grids with hundreds of robots and spanning areas that are multiple times the size of a soccer pitch such an arrangement may be challenging, especially where lower power transmission protocols are employed, but it does make for a very robust network.

### Mesh configuration

As mentioned above, the overheads associated with mesh networks configuring themselves make them generally ill-suited for high node mobility situations as significant amounts of communication time/bandwidth must be spent in order to continually work out (for example by RSSI (Received Signal Strength Indicator) sounding) which nodes are sufficiently near to a given node in order to be connected to by that node.

However, in order for robotic container handling vehicles to be moved across the grid without colliding with one another, knowledge is needed as to the position of each robotic container handling vehicle at any given point. That knowledge may be used to configure the mesh network without the need for the mesh network to work out its own configuration. Such an approach reduces network communication traffic (for example by reducing/removing RSSI sounding) and consequently power consumption and also enables a mesh network approach to be used for highly mobile robotic container handling vehicles.

For a centrally controlled grid, control processing system 400 is arranged to provide routing information to each of the robotic container handling vehicles. The routing information may be provided directly from an access point 134, 409 to each robot 122, 202, 204 - as could occur with a network topology like that of Fig. 7 - or it may be provided to a subset of the robots 122, 202, 204 via one or more access points 134, 409 before being relayed through the mesh network to the robots 122, 202, 204 - as could occur with a network topology like that of Fig.s 6A and 6B. In the situation where the routing information is relayed through the mesh network to the robots 122, 202, 204, it may be broadcast to all robots 122, 202, 204, or may be unicast to a specific robot or multicast to set of robots which will, for network configuration purposes, need to know of that particular routing information.

Once each robot has received its routing information and routing information for at least some of the robots which will come into its communication range during an upcoming time period, then a determination can be made at the robot as to which robots to attempt to communicate with at various time points within that time period. For example a first robot `A' may make a determination from the routing information that robots 'B', `C' and `D' are in close proximity at time point t₀ and so may send mesh messages out to robots B, C, and D during a time period tₚₒ starting at t₀ and ending at t₁. Robot A may do that without transmitting any wireless discovery messages or performing any signal strength sounding - such as RSSI measurements. Robot A may determine that during a time period tₚ₁ starting at t₁ and ending at t₂ robot 'B' will move away from robot A and robot 'E' will move towards robot A and so may configure itself to send messages out to robots C, D, and E during a time period tₚ₁. Robot A may have been engaged in a container picking operation during time periods tₚ₀ and tₚ₁ and may then need to move across the grid during a time period tₚ₂ starting at t₂ and ending at t₄. Robot A may determine that during time period tₚ₃ (at time point t₃) it will have moved away from C, D and will be passing briefly within range of robot 'F'; accordingly robot A may configure itself to send messages out to robots E and F at time point t₃. Robot A may be in motion at time point t₃.

Additionally or alternatively, the control processing system 400 may, during its process for determining the routing information (based on the routing information) determine which nodes should connect to which other nodes at a given time point/during a given time period before conveying that information as mesh network configuration information to each of the nodes - either directly from access point 134, 409 or by relaying that information either in its entirety or in a robot-by-robot manner across the mesh network. In the situation where the control processing system 400 directly conveys that information to the robots, the mesh network may operate without ever communicating any mesh node configuration information within it.

As one possibility, each robot periodically or at prearranged time points shares via its respective mesh node its position information - for example by broadcasting that information within the mesh network. That position information may be derived from its routing information and/or may have been sensed by the robot - for example by detecting and counting rails that it passes in the X- and Y-directions or by sensing position indicators in the grid. The shared position information may be a current position or an expected future position. Another robot receiving that information can then use the position information in combination with their own current/expected future position in a configuration process for configuring the other mesh node. As an example, a robot receiving position information from ten other robots may determine to only communicate with those robots that are/will be positioned within a certain distance of the receiving robot - which distance could for example be a Euclidean distance or could be defined in terms of a range of cells in the X- and Y-directions.

In situations where not all robots 122, 202, 204 are in direct communication with an access point 134, 409, at startup a conventional mesh node discovery approach may be employed to establish communication across the mesh network prior to later performing mesh network configuration based on routing or position information.

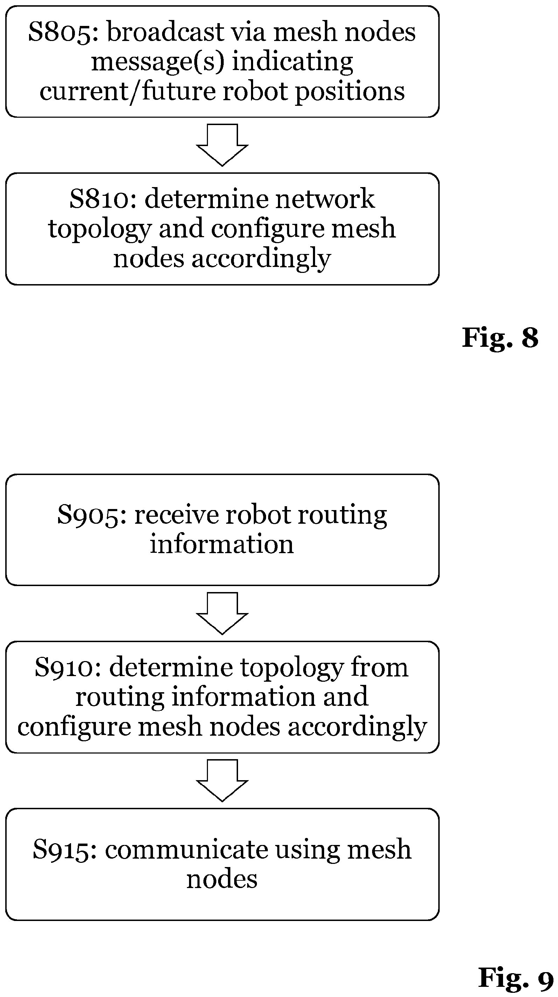

Fig. 8 is a flowchart of a method according to this disclosure. At step S805, one or more messages are broadcasted via the network of mesh nodes. Each message comprises information indicative of a current or future position of one or more of the robotic container-handling vehicles. That information may simply be the current or expected future position of one or more of the robots or it may be information from which current/future positions can be determined - such as routing information. In the event that a single message is broadcast, then that message may contain information indicative of current or future positions of all of the robots on the grid. As another possibility, a plurality of messages may be broadcast with the overall contents of the plurality of messages being indicative of current or future positions of all of the robots on the grid. At step S810, a current or expected future topology of the mesh network is determined based on the current/future positions of the robots and one or more of the mesh nodes (robots) are configured based on that topology.

Fig. 9 is a flowchart of a further method according to this disclosure. At step S905, routing information for routing movement of one or more of the robotic container-handling vehicles about the grid is received. At step S910, a current or expected topology of the network of mesh nodes using the received routing information and one or more of the mesh nodes (robots) is configured based upon the current or expected topology. At step S915, the so-configured mesh nodes communicate over the network of mesh nodes. In the method of Fig. 9, communication over the network of mesh nodes(S915) is performed using a first radio protocol/resource and the routing information is received (S905) using a second radio protocol/resource.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic container-handling vehicle configured to move about a grid of rails of an automated storage system and act as a mesh node for communicating with other such vehicles.

2. The robotic container-handling vehicle of claim 1, further configured to receive routing information for routing movement of the robotic container-handling vehicle about the grid.

3. The robotic container-handling vehicle of claim 2, further configured to communicate via the mesh node using a first radio protocol/resource and receive the routing information using a second radio protocol/resource.

4. The robotic container-handling vehicle of claim 3, further configured to:
disable movement of the robotic container-handling vehicle about the grid after an expected signal using the second radio protocol/resource is not received; and
communicate via the mesh node even when movement of the robotic container-handling vehicle about the grid is disabled.

5. The robotic container-handling vehicle of any preceding claim, further configured to communicate, via the mesh node, status information about at least one of the robotic container-handling vehicles.

6. The robotic container-handling vehicle of claim 5, wherein the status information comprises one or more of sensor information, diagnostic information, service information, and maintenance information about at least one of the robotic container-handling vehicles.

7. The robotic container-handling vehicle of claims 2 to 6 as dependent on claim 2, further configured to use at least one of the routing information and a current position of the container-handling vehicle in a configuration process for configuring the mesh node.

8. The robotic container-handling vehicle of claim 7, wherein the configuration process comprises the robotic container-handling vehicle sharing, via the mesh node, information with at least one other such vehicle, the shared information being based on at least one of their respective routing information and their respective current positions.

9. The robotic container-handling vehicle of claim 8, wherein the shared information comprises an expected future position of the respective robotic container-handling vehicle.

10. An automated storage system having a grid of rails and a plurality of the robotic container-handling vehicles of any preceding claim.

11. A method comprising communicating over a network of mesh nodes of respective robotic container-handling vehicles each configured to move about a grid of rails of an automated storage system.

12. The method of claim 11, wherein the communicating comprises broadcasting one or more messages via the network of mesh nodes, wherein the broadcasted one or more messages each comprise information indicative of a current or future position of one or more of the robotic container-handling vehicles and the method further comprises determining a current or expected topology of the network of mesh nodes using the broadcasted one or more messages and configuring one or more of the mesh nodes based upon the current or expected topology.

13. The method of claim 11, further comprising receiving/determining routing information for routing movement of one or more of the robotic container-handling vehicles about the grid, wherein the communication over the network of mesh nodes is performed using a first radio protocol/resource and the routing information is received using a second radio protocol/resource, and the method further comprises determining a current or expected topology of the network of mesh nodes using the received routing information and configuring one or more of the mesh nodes based upon the current or expected topology.

14. The method of any of claims 11 to 13, wherein the communicating comprises broadcasting one or more status messages to the robotic container-handling vehicles, wherein the broadcasted one or more messages each comprise status information comprising one or more of sensor information, diagnostic information, service information, and maintenance information about one or more of the robotic container-handling vehicles.

15. A computer-readable medium comprising instructions which, when executed by a one or more processors of one or more devices, cause the one or more devices to perform the method of any of claims 11 to 14.
